# EUROPÄISCHE PATENTANMELDUNG

(11) **EP 1 138 371 A1**
(43) Veröffentlichungstag der Anmeldung: **04.10.2001**
(21) Anmeldenummer: 00106997.0
(22) Anmeldetag: 01.04.2000
(51) Int. Cl.: B01F 3/04, C02F 3/20

(54) **Vorrichtung zum Belüften von Wasser**

(71) Anmelder: GUMMI-JÄGER KG GMBH & CIE, D-30625 Hannover (DE)
(72) Erfinder: Jäger, Andreas, Dr., 30559 Hannover (DE)
(74) Vertreter: Depmeyer, Jochen

(57) **Zusammenfassung**

Die Erfindung geht aus von einer Vorrichtung zum feinblasigen Belüften von Wasser mit zumindest einem strangförmigen Belüftungselement mit einer oberhalb eines Luftzuführungskanals angeordneten geschlitzten Wandung, deren Schlitze sich elastisch weiten können,wobei das Belüftungselement durch Bodenhalterungen gegen Hubbewegungen gesichert ist. Um eine Montage und Demontage der Belüftungselemente bei nicht abgesenktem Wasserspiegel vollziehen zu können, ist erfindungsgemäss das Belüftungselement längsverschiebbar in seinen Halterungen gelagert in der Weise, dass es durch Zugeinwirkungen an einem Ende aus seinen Halterungen entfernbar ist.

## Beschreibung

Die Erfindung betrifft eine Vorrichtung zum feinblasigen Belüften von Wasser mit zumindest einem strangförmigen Belüftungselement mit einer oberhalb eines Luftzuführkanals angeordneten geschlitzten Wandung, deren Schlitze sich unter Luftzufuhr elastisch weiten, wobei das Belüftungselement durch am Boden des zu belüftenden Wasserbehälters befestigte Halterungen gegen unerwünschte Hubbewegungen gesichert ist.

Bei bekannten Vorrichtungen dieser Art sind die Belüftungselemente starr im Bodenbereich des Wasserbehälters befestigt. Dazu dienen besondere Verankerungsmittel oder fest installierte Rohrleitungen, über die den Belüftungselementen die vogespannte Luft zugeführt wird. Es versteht sich, dass bei einem Verschleiss oder Beschädigungen des Belüftungselementes besondere Vorkehrungen getroffen werden müssen, um die Belüftungselemente auswechseln zu können, zumal deren Reparatur an Ort und Stelle im Regelfalle nicht möglich ist. Dabei ist es stets erforderlich, die Wasserbehälter zu entleeren, um die Montagearbeiten überhaupt fachgerecht ausführen zu können.

Aufgrund der Erfindung sollen diese Nachteile praktisch ausgeschaltet werden; demgemäss sollen also aufgrund der Erfindung eine Demontage und Montage auch bei nicht abgesenktem Wasserspiegel durchführbar sein.

Zur Lösung dieser Aufgabe ist erfindungsgemäss das zugfest ausgebildete Belüftungselement längsverschiebbar an seinen vorzugsweise in einer Vielzahl vorgesehenen Halterungen gelagert in der Weise, dass das Belüftungselement durch Zugeinwirkung an einem Ende in seiner Gesamtheit aus seinen Halterungen herausgezogen werden und z.B. durch Nachführen eines weiteren Belüftungselementes ersetzt werden kann. Die Zugeinwirkung, die z.B. durch eine Winde und Aufwickeln des alten Belüftungselementes aufgebracht wird, kann jedoch auch für beide Enden des Belüftungselementes vorteilhaft sein, um so während des Belüftungsbetriebes das Belüftungselement gestrafft zu halten. Darüber hinaus ist es aber auch möglich, die Enden des Belüftungselementes mit zugfesten Seilen oder Bändern als Verlängerungen auszustatten, mit denen das Belüftungselement in die Wirkstellung gezogen oder aus dieser herausgzogen werden kann.

Für die Halterungen werden mit Vorteil Halteelemente vorgesehen, die die Belüftungselemente ganz oder teilweise übergreifen, die jedoch an ihren den Belüftungelementen zugekehrten Seiten so ausgeführt sein müssen, dass die erwünschten Relativbewegungen möglich sind. So können glatte, zweckmässigerweise konvexe Führungsflächen, aber auch zylindrische Körper vorgesehen sein, die auch drehbar gelagert werden können. Darüber hinaus müssen die die Belüftungselemente übergreifenden Halterungen auch so gestaltet sein, dass ( bei nicht unter Innendruck stehenden Belüftungselementen ) ein ausreichendes Spiel zwischen den Halterungen und den Belüftungselementen vorhanden ist, damit bei Längsverschiebungen der Belüftungselemente Verklemmungen bzw. zu grosse Reibungswiderstände ausgeschlossen sind.

Weitere Einzelheiten der Erfindung werden anhand der Zeichnung erläutert, in der ein Ausführungsbeispiel der Erfindung dargestellt ist.

Es zeigen :
Fig. 1 einen. Teilquerschnitt durch ein zu belüftendes Wasserbecken,
Fig. 2 eine Teildraufsicht auf den Beckenausschnitt gemäss Fig, 1,
Fig. 3 einen Schnitt nach der Linie III - III von Fig. 1 und
Fig. 4 einen Teilschnitt nach der Linie IV - IV von Fig. 2.

Innerhalb eines Wasserbeckens mit Boden 1, Seitenwänden 2, Aussenrand 3 und Wasserfüllung 4 befinden sich in Vielzahl einander parallele, paarweise zusammengefasste Belüftungselemente 5, die über den grössten Teil der Beckenbreite auf dem Boden 1 aufliegen und zu beiden Seiten des Wasserbeckens über einen Bogen 6 senkrecht nach oben geführt sind. Am Aussenrand 3 sind die Belüftungselemente 5 über eine gegebenenfalls antreibbare Rolle 7. seitlich nach aussen geführt und dort mit einer Kupplung 8 versehen, an die eine Druckluftleitung angeschlossen werden kann.

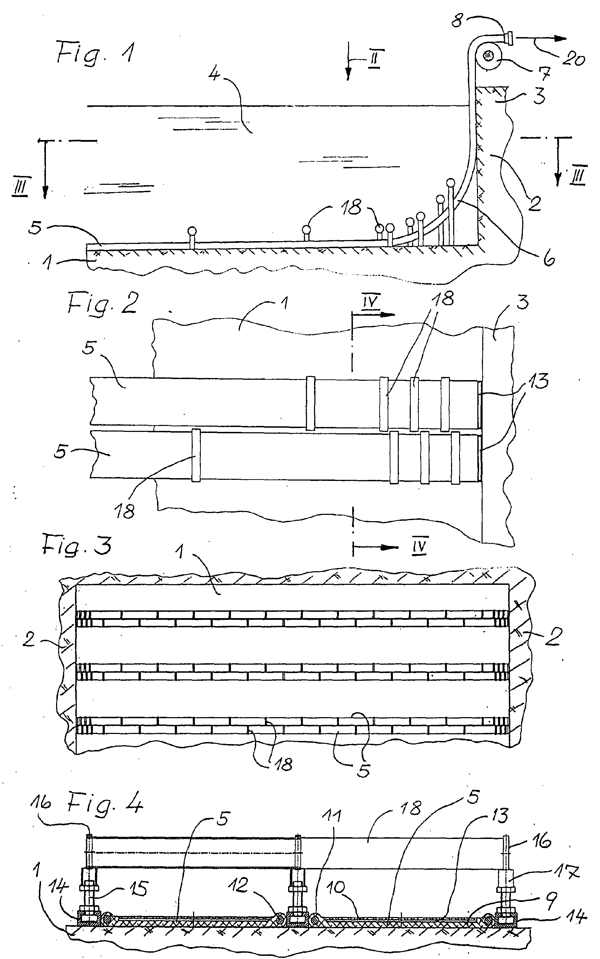

In Fig. 1 ist nur ein Rand des Wasserbeckens dargestellt; es versteht sich, dass der gegenüberliegende Rand sinngemäss bzw. gleichartig ausgeführt ist, jedoch kann hier auf einen Bogen 6 mit dem senkrecht nach oben geführten Abschnitt ggfs. verzichtet weren.

Die strangförmigen Belüftungselemente 5 bestehen aus einer unteren Platte 9, einer oberen Platte 10 und Randteilen 11, über die die Teile 9, 10 einstückig ineinander übergehen. Die Bestandteile 9, 10 und 11 sind aus Gummi od. dgl. gefertigt. Um die Belüftungselemente 5 zugfest auszubilden, sind die Randteile 11 mit eingebetteten zugfesten Seilen 12 versehen. Ggfs. kann die Zugfestigkeit und ggfs. auch eine Quersteifigkeit aber auch durch andere Verstärkungseinlagen z.B. Gewebeeinlagen in der unteren Platte 9 erreicht werden. Wichig ist, dass die obere Platte 10 mit durchgehenden Schlitzen versehen ist, die die erwünschte feinblasige Belüftung der Wasserfüllung 4 zulassen. Die vorgespannte Luft wird dabei in den als Luftzuführkanal dienenden Raum 13 zwischen den beiden Platten 9, 10 eingeleitet, um so die Schlitze aufzuweiten und die feinen Luftbläschen abzuleiten. Es versteht sich, dass die obere Platte 10 nur in dem Längenbereich der Belüftungselemente 5 mit Schlitzen versehen ist, der dem Boden 1 unmittelbar zugekehrt ist. In den Endbereichen dienen die Belüftungselememte 5 somit nur der Luftzuführung für die geschlitzten Längenabschnitte.

Wichtig ist die Halterung der Belüftungselemente 5, um ihre Lage in den verschiedenen Längenabschnitten Gemäss Fig. 1 - 3 sicherzustellen. Zu diesem Zweck sind am Boden 1 Hohlschienen 14 befestigt, die zum Eingriff der Köpfe von senkrecht nach oben stehenden Schrauben 15 dienen, auf die oben mit einer Öse 16 versehene Muttern 17 höhenverstellbar aufgeschraubt sind. Diese Ösen 16 dienen zur Lagerung von waagerechten Rohren 18, gegen die sich die unter Innendruck aufblähenden Belüftungselemente 5 von unten anlegen. Die Rohre 18 können auch drehbar gelagert sein. In jedem Falle müssen die Rohre 18 aber mit Spiel oberhalb der Belüftungselemente 5 angeordnet sein, das sich ohnehin beim Aublähen der Belüftungselemente 5 aufhebt.

Da die Belüftungselemente 5 paarweise angeordnet sind, sind die Rohre 18 benachbarter Belüftungselemente 5 gegeneinander versetzt. Zudem sind die Halterungen im Bereich der Bögen 6 in unterschiedlicher Höhe installiert. Darüber hinaus ist der gegenseitiger Abstand der Halterungen so gewählt, dass sich die Belüftungselemente 5 zwischen den aufeinander folgenden Halterungen nur geringfügig nach oben auswölben können.

Die Zugeinwirkung im Sinne des Pfeiles 20 hat weiterhin den Vorteil, dass die Belüftungselemnte 5 auch während der Belüftung unter Zugspannung gehalten werden können.

Diese Halterung der zugfesten Belüftungselemente 5 ermöglicht eine Längsverschiebung der Belüftungselemente 5. Jedes Belüftungselement 5 kann durch Zugeinwirkung im Sinne des Pfeiles 20 aus dem Wasserbecken herausgezogen werden, ohne dazu das Wasserbecken leeren zu müssen, um so unerwünschte Auswölbungen zwischen den Halterungen auszuschliessen. Mit dem Herausziehen eines Belüftungselementes 5 kann ein anderes Belüftungselement 5 installiert werden, indem es mit seinem vorderen Ende mit dem hinteren Ende des zu entfernenden Belüftungselementes 5 verbunden wird. Das zu entfernende Belüftungselement 5 dient dabei nur als Hilfsmittel zum Einziehen eines neuen Elementes.

Die Belüftungselemente 5 können im Bereich der Bögen 6 bis zu den Anschlüssen bzw. Kupplungen 8 hin lediglich als Zugglieder ausgeführt werden, denen jedoch vorzugsweise Druckluftzuleitungen zugeordnet werden sollten, um die Speisung mit vorgespannter Luft sicherzustellen. Die Zugglieder können z.B. als Bänder oder Kabel ausgebildet sein.

Es ist oft vorteilhaft, jedem Belüftungselement 5 beidendig einen Luftzuführungsanschluss zuzuordnen, um so die Gleichmässigkeit der Belüftung über die Länge der Elemente hinweg zu verbessern.

## Patentansprüche

1. Vorrichtung zur feinblasigen Belüftung von Wasser mit zumindest einem strangförmigen Belüftungselement mit einer oberhalb eines Luftzuführungskanals angeordneten geschlitzten Wandung, deren Schlitze sich unter einer Luftzufuhr elastisch weiten, wobei das Belüftungselement durch am Boden des zu belüftenden Wasserbehälters befestigte Halterungen gegen ungewollte Hubbewegungen gesichert ist, **dadurch gekennzeichnet, dass** das zugfest ausgeführte Belüftungselement (5) längsverschiebbar an seinen vorzugsweise in einer Vielzahl vorgesehenen Halterungen so gelagert ist, **dass** es bei gefülltem Wasserbehälter durch Zugeinwirkung an einem Ende aus seinen Halterungen herausziehbar ist.

2. Vorrichtung nach Anspruch 1, **dadurch gekennzeichnet, dass** das Belüftungselement (5) an seinem beim Herausziehen hinteren Ende mit Befestigungsmitteln zum Nachziehen eines weiteren Belüftungselementes (5) versehen ist.

3. Vorrichtung nach Anspruch 1 und 2, **dadurch gekennzeichnet, dass** das Belüftungselement (5) beidendig mit einem Druckluftanschluss und/oder einem zur Zugübertragung geeigneten Mittel versehen ist.

4. Vorrichtung nach Anspruch 1, **dadurch gekennzeichnet, dass** das Belüftungselement (5) zumindest an einem Ende aus dem Wasserbehälter herausgeführt und im Bereich des Behälterrandes mit einer Umlenkung ggfs. in Form einer vorzugsweise antreibbaren Rolle (7) versehen ist, auf die das Belüftungselement vorzugsweise aufwickelbar ist.

5. Vorrichtung nach Anspruch 1, **dadurch gekennzeichnet, dass** die Belüftungselemente (5) paarweise in Parallelstellung verlegt sind.

6. Vorrichtung nach Anspruch 1, **dadurch gekennzeichnet, dass** die das Belüftungselement (5) zumindest teilweise übergreifenden Teile (18) der Halterungen mit Spiel über den nicht unter Überdruck stehenden Belüftungelementen (5) angeordnet sind.

7. Vorrichtung nach Anspruch 6, **dadurch gekennzeichnet, dass** die dem Belüftungselement (5) zugekehrten Seiten der Teile (18) abgerundet oder konvex gestaltet und ggfs. Bestandteil einer drehbaren Rolle sind.

8. Vorrichtung nach Anspruch 6, **dadurch gekennzeichnet, dass** die Teile (18) höhenverstellbar angeordnet sind.

9. Vorrichtung nach Anspruch 1, **dadurch gekennzeichnet, dass** lediglich die waagerecht auf dem Boden (1) angeordneten Abschnitte der Belüftungselemente (5) geschlitzte, zur Abgabe von Luftblasen geignete Wandungen (10) aufweisen.

10. Vorrichtung nach einem oder mehreren vorhergehenden Anprüchen, **dadurch gekennzeichnet, dass** die im Ruhezustand (nicht unter Innendruck stehend) im wesentlichen flach rechteckigen Belüftungselemente (5) aus einem Elastomer bestehen und durch Verstärkungseinlagen (12) zugfest ggfs. auch noch quersteif gestaltet sind.

11. Vorrichtung nach Anspruch 1, **dadurch gekennzeichnet, dass** bei mehreren, zweckmäsigerweise parallelen Belüftungselementen (5) bzw. Paaren dieser Elemente jedem Element ein eigener, mit einm Absperrorgan versehener Druckluftanschluss zugeordnet ist.
